# EUROPEAN PATENT SPECIFICATION

(11) **EP 2 028 603 B1**
(45) Date of publication and mention of the grant of the patent: **13.07.2011**
(21) Application number: 07114578.3
(22) Date of filing: 20.08.2007
(51) Int. Cl.: G06F 21/02

(54) **External storage medium adapter**
Adapter für ein externes Speichermedium
Support d'adaptateur de stockage externe

(43) Date of publication of application: 25.02.2009
(73) Proprietor: NTT DoCoMo, Inc., Tokyo (JP)
(72) Inventor: Lachmund, Sven, 80687, Munich (DE); Zugenmaier, Alf, 81241, Munich (DE)
(74) Representative: Betten & Resch

(56) References cited:
- GB-A- 2 372 600
- US-A1- 2003 105 967
- US-A1- 2004 030 668
- US-A1- 2004 143 733

## Description

### FIELD OF THE INVENTION

The present invention relates to an external storage medium adapter.

### BACKGROUND OF THE INVENTION

The present invention relates to an external storage medium on which data can be stored in encrypted form. More particular, it relates to an external storage as described in European Patent application no. 06101719.0 filed by the same applicant as the present application.

The external storage as described in this application no. 06101719.0 can store data in encrypted form together with access credentials which allow the decryption of the stored data. The external storage detects if it is disconnected from its host, and then a counter or timer starts and if an expiration criterion based on an expired time or a predefined number of counted events is met the access to the data is denied due to the fact that the data cannot be decrypted anymore since the access credentials which were stored on the external storage are deleted.

In this manner data can securely be stored on the external storage because the access is not unlimited but will be made impossible after the expiration criterion is met. E. g. if the storage medium gets lost or is stolen, the unauthorized user cannot access the storage after the expiration criterion is met, e.g. after the expiration of a certain time. If this time is set sufficiently small (e.g. a few minutes) it is extremely unlikely that the data stored on this device can be accessed by a user for which the data are not intended.

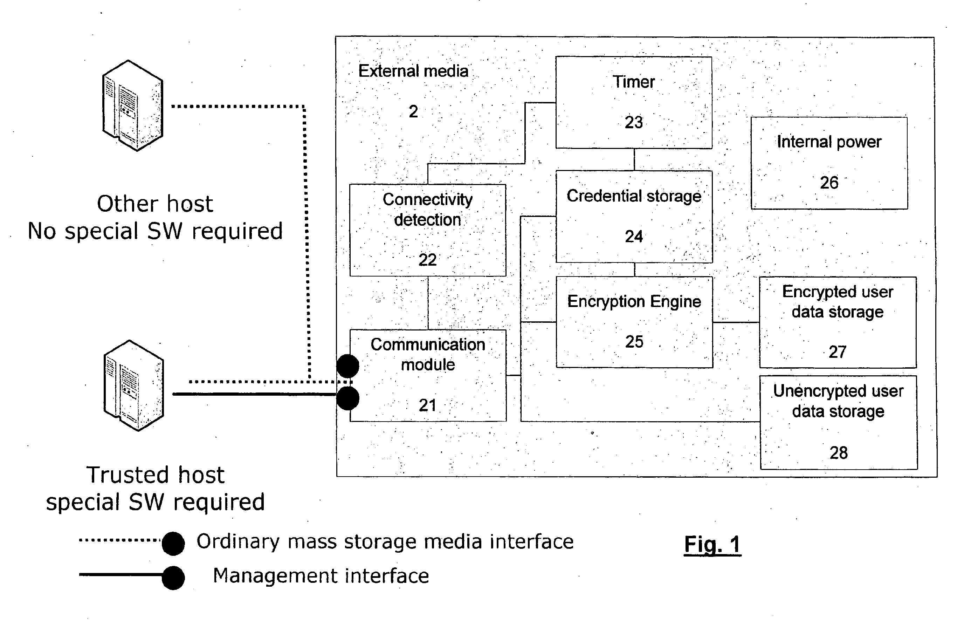

Fig. 1 schematically illustrates a configuration of an external storage as described in the previous European Patent application no. 06101719.0. When it connects to a "trusted host" data and access credentials can be written onto the storage module. There, data will be encrypted and stored on encrypted user data storage 27 after encryption of the data by the encryption engine 25. The credentials needed to encrypt data and decrypt the encrypted data are written into credential storage 24 by the trusted host. Connectivity detection module 22 detects when the storage is disconnected from the host and then the timer 23 starts to operate. As long as the expiration condition (the expiration of the time limit defined by the timer) is not met, any host other than the trusted host can access the encrypted data through using the credentials stored in credential storage 24. After expiration of the timer, however, the access credentials are deleted and access is not possible anymore. A more detailed description of this and other embodiments may be found in the aforementioned European patent application no. 06101719.0.

However the external storage as defined in the previous patent application no. 06101719.0 mentioned before has limited amount of persistent memory because the built-in persistent memory of the external storage medium has a fixed size. To extend the storage capacity, a new storage medium is to be used/purchased in case of the previous external storage medium. It is therefore desirable to overcome this deficiency.

US 2004/0143733 A1 discloses a mediator for the protection of data in storage devices over a network. The mediator connects over the network to one or more data clients and to one or more data storage devices, and provides secure storage of data for the data clients on the data storage devices. The mediator functions as a central point for the encryption of data from the data clients to be stored on the storage devices, as well as decryption of the encrypted data retrieved from the storage devices for delivery to the data clients. The mediator can handle multiple protocols, such as IP protocols, file service protocols, and block device protocols; multiple storage technologies such as Fiber Channel and Ethernet; and multiple services such as block, file, and database services. The mediator can also perform various fictions such as protocol translation. The mediator benefits from the fact that all storage devices, as well as data clients, are connected over a network, thereby allowing flexibility, expandability, and scalability of configurations without the limitations imposed by local interconnectivity. At the same time, however, the mediator provides secure virtual storage to data clients without requiting them to be involved in any of the encryption or decryption operations. In particular; data clients are not burdened with compulsory management of any keys used in the protection of stored data. As a result, the encryption/decryption of stored data can be optimized for security without concerns for key distribution.

US 2003/0105967 A1 discloses an apparatus for encrypting data between a processor and a memory and a method thereof are disclosed. The processor includes: a module for encrypting an input data or decrypting an encrypted data; a key table for storing secret keys for data encryption/decryption; and a control unit for generating an index for the encrypting operation of the module. The memory includes: a memory cell array for storing data encrypted by the module of the processor; and a key state memory for storing the index generated in the control unit of the processor and used for the encryption of the input data.

### SUMMARY OF THE INVENTION

The present invention is defined in claim 1. The dependent claims define embodiments of the invention.

According to one embodiment said identifiers for identifying credentials are unique or at least stochastically unique across all external storage medium adapters. This avoids a collision between credentials of different adapters.

According to one embodiment said adapter further comprises:
an operations buffer for storing all write operations until it is detected that the file system is in a consistent state again, and as soon as this happens, the files touched by the write operation are updated on the persistent storage device.

The operations buffer in one embodiment is also used to collect operations on blocks until it can be determined what kind of operation it is and on what file. After that, in the block/file mapping based embodiment, the adapter is able to contact the separate storage device on its file interface to read/write the file.

According to one embodiment the consistency of the file system is detected based on one or more of the following triggers:
a certain time without write operations;
write operations to certain blocks such as those containing directory structures or file system tables or predefined files;
detaching the external medium adapter from said computer.

According to one embodiment credentials are added to said credential storage on the adapter by storing them as special files in either a specific location or with a specific name so that they can be identified by the encryption engine. This enables the writing of credentials without a specific dedicated command set. Normal mass storage device class commands can be used for writing credentials.

### DESCRIPTION OF THE DRAWINGS

Fig. 1 schematically illustrates an external storage medium of a related invention as described in an earlier application.
Fig. 2 schematically illustrates an external storage medium adapter according to an embodiment of the invention.
Fig. 3 schematically illustrates an external storage medium adapter according to a further embodiment of the invention.
Fig. 4 schematically illustrates an operation of an embodiment of the invention.
Fig. 5 schematically illustrates an operation of a further embodiment of the invention.
Fig. 6 schematically illustrates a mapping to be used with an embodiment of the invention.

### DETAILED DESCRIPTION

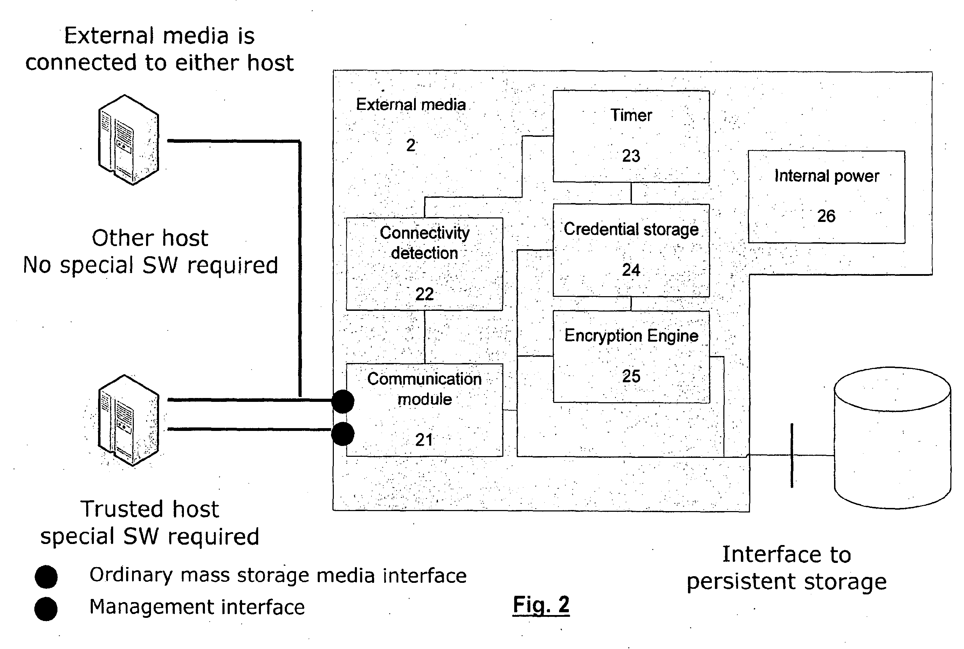

According to one embodiment there is provided an external storage medium adapter which together with a separate persistent memory which can be accessed through this adapter provides a functionality similar to the one of the external storage medium of the previous application, however, which overcomes the deficiency of the limited storage amount. This is achieved by providing a separation of the persistent memory from the encryption engine and credential management and storage as schematically illustrated in Fig. 2. The persistent memory for storing the (encrypted) user data is kept in another device. Thus, the encryption engine and credential management which is provided in the external storage medium adapter in fact acts as an adapter or intermediary taking unencrypted data on one interface (on the left-hand side of Fig. 2) and storing the encrypted data and associated metadata via another interface (shown on the right-hand side of Fig. 2 as interface to persistent storage). For reading the data which has been stored in the separate device which contains the persistent memory, the reverse operation is performed. In one embodiment different persistent memory devices can be used with the same adapter.

In this embodiment the encryption engine encrypts the data to be written into the persistent storage by using the credentials (which may be one or more encryption keys) stored in credential storage 24 and then stores them into the persistent storage. When reading the data they are decrypted using the corresponding credentials stored in credential storage 24. The credentials may have been written to the external storage medium adapter using a "trusted host" as schematically illustrated in Fig. 2, or they may have been downloaded into the credential storage 24 from a "credential provider" as described in the parallel European Patent application number 07114320.0 filed on August 14, 2007, by the same applicant as the present one and titled "External Storage Medium". For details regarding the loading of the credentials into the external storage medium reference is made to this parallel application. In the same manner the credentials may be loaded also into the credential storage 24 of the present embodiment.

The external storage medium adapter further comprises a module (not shown in Fig. 2) for credential management which maintains a mapping between the data stored in the persistent storage and the corresponding credential(s) used to encrypt them. In one embodiment the same credential or key is used for all of the data on the persistent storage, however, according to a further embodiment different data may be encrypted using different credentials. The external storage medium adapter then performs a suitable credential management to identify which credential is to be used to encrypt or decrypt which data.

In the described manner, by decoupling encryption engine, credential management and storage from persistent memory, storage capacity can be extended flexibly, by just using different or multiple storage devices.

In the following further embodiments of the invention will be described.

The embodiments of the invention are related to an external storage medium shown in Fig. 1 and which is described in more detail in the already mentioned earlier European Patent application no. 06101719.0 and to which reference is made for a more detailed description of such an external storage medium.

According to an embodiment of the present invention, encrypted user data storage (27) and unencrypted user data storage (28) (which is an optional feature for storing unencrypted data) are kept outside of the Secure External Storage Medium shown in Fig. 1. Such an embodiment forming an external storage medium adapter is schematically illustrated in Fig. 2. The data in this embodiment is stored in a separate persistent storage outside the adapter.

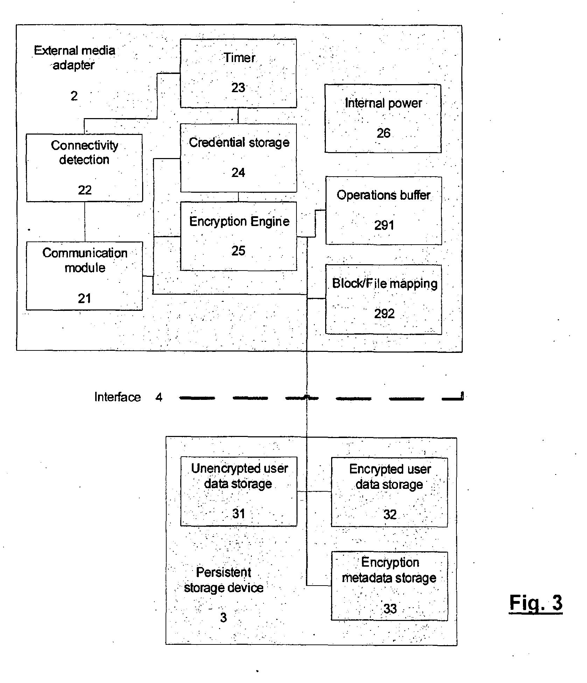

Now a further embodiment will be explained referring to Fig. 3. In this embodiment, for communication between the External Storage Medium Adapter (2) and the Persistent Storage Device (3), the interface (4) is used. The Interface (4) can be any kind of interface that is suitable to set-up communication between the devices. Suitable interfaces are for instance a direct mass storage media connection (such as USB) or a network based communication, where both devices are connected to the network. For the latter communication, according to one embodiment means to detect integrity violations are added.

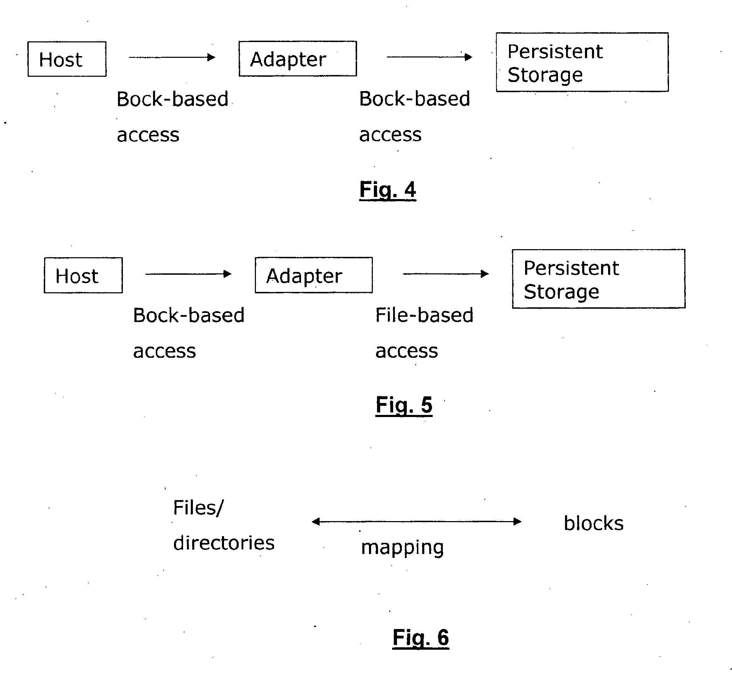

According to one example, to read and write data from/to the Persistent Storage Device, blocks are addressed using their block number, which identifies them uniquely. The Interface 4 is able to exchange these block numbers and the data stored at that block or the data to be stored at that block. In this example the data between the persistent storage and the adapter via interface 4 is block based, and the access to the adapter from the host via the communication module 21 is block-based as well. In this manner the adapter "transparently" enables a block based access of the persistent storage. The persistent storage in this example may be of the "mass storage device class" which means that the access to the device is block based and not file-based. A file system may be provided on the host (not shown in Fig. 3) which accesses the adapter by block based commands using the mass storage device class interface, and this access is then "transparently" forwarded to the persistent storage. This is schematically illustrated in Fig. 4, which shows that the host (the computer which accesses the persistent storage through the adapter) performs a block based access on the adapter which then is "forwarded" as block based access to the persistent storage. The access in this example may e.g. be the mass storage device class interface of the USB interface, which is implemented in almost all modern computer systems.

According to one example as shown in Fig. 3 the persistent data storage comprises a metadata storage (33) which stores sufficient information to enable the external storage medium adapter to determine which credential can be used for encryption and decryption. This metadata may e.g. comprise an identifier which identifies a corresponding credential stored in credential storage 24 of the adapter. Using this identifier which is then transmitted together with the corresponding encrypted data from the persistent storage medium to the adapter the adapter can identify the credential to be used to decrypt the data. The adapter for that purpose performs a mapping between the credentials and their corresponding identifiers, and at the persistent storage the metadata are stored such that there is maintained a mapping between the blocks or files and the corresponding credential identifiers.

In view of the foregoing, it is preferable if the credentials in the adapter are named uniquely (or stochastically uniquely) across all adapters. This helps ensure that the persistent storage device is handled properly when used with different adapters. The term "stochastically unique" here means for example that the likelihood for two different credentials of different adapters having the same identifier is small, preferably sufficiently small to be negligible.

Instead of using a block interface, according to one embodiment a file based interface can be used as interface 4 in Fig. 3. This enables the adapter to operate on the level of files and directories, identified by their names and their path through parent directories, instead of addressing blocks. Because the interface between the host and the adapter may still remain a block based interface, in this embodiment the directory structure is recreated inside the adapter. The block/file mapping component (292) performs this task. The operation of such an embodiment is schematically illustrated in Fig. 5 which shows a situation where the access from the host to the adapter is block-based and the access from the adapter to the persistent storage is file-based.

The operation of the block/file mapping is schematically illustrated in Fig. 6. In order to enable a file based access through interface 4 if the access which comes into the adapter from the host through communication module 21 is block-based, there must be performed a translation or a "mapping" of the blocks to the corresponding files or directories. As can be seen from Fig. 5, this can be achieved by performing a suitable mapping between the blocks and the files/directories. A block-based request in this manner can be translated into a corresponding file-based request and vice versa. The mapping may be performed using one or more suitable tables which maintain the mapping.

In this manner, it becomes possible to access a persistent storage which requires a file-based access through an interface (the host-adapter interface) which is block-based. This means that e.g. through a mass storage device class interface (which is available on almost all computers which may act as a host accessing the adapter) there may be accessed a persistent storage which requires a file-based access, such as e.g. a network attached storage device (NAS) or any other devices requiring a file-based access.

According to one embodiment the adapter generates a file system based on the mapping mentioned before. This file system (which may also be called "virtual file system" because from the host accessing the adapter it is not noticed) is then used to perform the file-based access through interface 4.

According to one embodiment, when the adapter (2) is connected to the persistent storage device (3), it first scans the directory structure on the persistent storage device. It then builds a virtual file system, which allows accessing of these files through a block based interface. The mapping between block address and position in a file is kept by the block/file mapping component (292). The mapping is available until the adapter is disconnected from the persistent storage device.

It will be apparent for the skilled person that for performing the task of creating and maintaining the virtual file system the adapter is provided with suitable components like a suitably programmed microprocessor and a storage for maintaining the necessary data for maintaining the file system.

In the following there will be described the operation of an embodiment where the access to the persistent storage is file-based and the access of the adapter from the host is block based. When a read request for one or more blocks is received via the Communication module (21), the corresponding file is looked up in the mapping to acquire the file from the persistent storage device. To decrypt the file, the credential used at time of encryption is to be looked up in the Encryption metadata storage (33). The credential is acquired from Credential storage (24) and the Encryption Engine performs decryption.

When a write request for one or more blocks is received via the Communication module (21), the operations buffer (291) stores all write operations until the file system is in a consistent state again. As soon as this happens, the files touched by the write operation are updated on the persistent storage device. File update is encrypted with the appropriate credential and the Encryption metadata is updated accordingly. Triggers to detect file system consistency are e.g. certain time without write operations, write operation to certain blocks, e.g. those containing directory structures or file system tables or predefined files, or detaching the external medium adapter from the host. Buffering operations until file system is consistent is required to deduce from the write commands sent on the Block interface level, which file is meant to be written.

The credential management in this embodiment may be performed like in the previous European Patent application no. 06101719.0 or like in the parallel application mentioned before and filed on August 14, 2007 at the European Patent Office and having the application number 07114320.0 .

According to one embodiment the adapter provides a user an interface through which he can monitor the file operations performed by the host computer on the persistent storage device via the adapter. One possible scenario is for example that the host computer belongs to company A, the adapter belongs to a staff member of company B and may be e.g. a mobile phone or any similar device, and the persistent storage may also belong to company B. Then the staff member may through his mobile phone (the adapter) enable the user of the computer to download some file from the persistent storage via his mobile device using the decryption capability of the adapter. The owner of the mobile device may, however, wish to control what file the computer which belongs to company A downloads from the persistent storage (e.g. a harddisk) belonging to company B. For that purpose the mobile device (the adapter) is equipped with a user interface which is built based on the file system maintained inside the adapter and which enables the user of the mobile device (the adapter) to monitor the file operations performed by the host computer. In one embodiment the interface at the adapter may just resemble the interface which is provided to the user of the host computer.

According to one embodiment there may further be provided some mechanism which enables the user of the adapter not only to monitor the file operations but also to either deny or allow any file operations. This mechanism may provide something similar like a "greenlight" button which allows the file operation and a "redlight button" which prohibits it. The interface may in one embodiment ask for each file operation the user of the adapter whether the operation is allowed or not. Depending on the response to this query the file operation is either performed or not performed.

According to examples the persistent storage device connected to the adapter may be any mass storage device such as an USB stick, a SD card, or any storage medium like e.g. a harddisk or a CD or DVD. The interface through which the connection between the adapter and the persistent storage is established may be a USB interface, a LAN or WLAN connection, or any other interface or connection.

According to one example the external storage medium adapter (2) is used without a separate persistent storage device. Instead the adapter has a storage (which needs not to be a persistent storage but can be a volatile storage) into which data can be written from the computer (the host) to which it is connected. In this example there is furthermore provided a file system which is generated inside the adapter, similar to the embodiment described before. It can be said that this example is similar to the one described before, but that instead of the persistent storage outside the adapter there is provided a - persistent or non-persistent - storage inside the adapter which is accessed in a file-based manner. Therefore, like in the previous embodiment, there is performed a mapping between blocks and files/directories. The file system is built inside the adapter on top of the storage, and it is used to access the storage by translating block based access commands into file-based access commands like in the previous embodiment.

In this example, however, the storage inside the adapter based on the file system provided inside has a file structure which provides an input file or input directory for writing data thereto and which in response to being written thereto is then encrypted and the encrypted file is then written into an output file or output directory.

Data that has been written to the adapter, e.g. into a certain directory, will be encrypted by using credentials and the encryption engine and can be retrieved via another directory (the "target location" or "output" directory) immediately after encryption has finished. For decryption this encrypted file can be written into a designated directory, from where it is decrypted and placed into a target (or output) directory. The adapter in this example therefore acts as an encryption/decryption dongle. In this example, however, the host accessing the adapter uses the block address based mass storage device interface but the storage access inside the adapter works on file level. In this way the adapter can be used by almost all hosts because almost all computers are equipped with a block address based mass storage device interface. Nevertheless the access to the storage inside the adapter is based on file-based access, which makes it possible to provide predefined source and/or target files/directories which can be used for encryption or decryption as described before. There may also be provided different source directories which have correspondingly different target directories, each pair of source/target directory using a different credential for encryption and/or decryption.

In some sense one may say that this example is the same as the one described before where the persistent storage was accessed with a file-based interface and the adapter was accessed with a block-based interface, except that the "persistent storage" is now located not separately outside the adapted but is located inside the adapter, that the persistent storage may also be a volatile storage, and that the file system created inside the adapted provides a "source location" and a "target location", the source location being for data to be encrypted or decrypted, and the target location being for writing thereto the data after encryption or decryption was performed.

According to one embodiment credentials are added to the Credential storage on the adapter by storing them as special files in either a specific location or with a specific name. In this embodiment, like in the previous one, the adapter has a file system generated inside it and there is performed a translation of a block-based access into a file based access using a block/file mapping. In this manner these files can be written to the adapter using the ordinary mass storage device class command set without the need of an extended command set.. The thus written files may based on their location or based on their name be recognised, and the encryption engine may then use them directly or store them at first in the credential storage so that from there they are then used for encryption/decryption by the encryption engine.

In the foregoing the present invention has been described by means of exemplary embodiments. The skilled person will understand that modifications may be made to these embodiments. For example, if an interface is said to be block-based, this interface may be of the type "block based mass storage device interface", but also any other interfaces which implement a block based access may be used. One example of a block-based interface which may be used in the embodiments of the invention is the USB interface or its variations.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention.

For example, the invention may be implemented by a mobile phone or a mobile device which is suitably programmed to operate as an external storage medium adapter in accordance with one of the embodiments described before.

## Claims

1. An external storage medium adapter (2) for establishing a connection between a computer and a separate persistent storage device, said external storage medium adapter comprising:
a first interface for connecting to said computer and for receiving through said interface from said computer data which is to be stored in encrypted form on said separate persistent storage device;
a second interface (4) for connecting said external storage medium adapter to said separate persistent storage device;
an encryption engine (25) for encrypting data which is received from said computer and which is to be written in encrypted form onto said persistent storage device or for decrypting data which is to be retrieved in decrypted form from said persistent storage device by using one or more credentials;
a credential storage (24) for storing said one or more credentials used to encrypt or decrypt said data, wherein
said adapter (2) maintains a mapping between a credential and its corresponding identifier, and said adapter is adapted such that further to said encrypted data there is written metadata onto said storage device, said metadata enabling for said encrypted data to identify the credential which is to be used by said adapter in order to decrypt said encrypted data, wherein
said second interface (4) for connecting said external storage medium adapter to said separate persistent storage device is a file-based interface, and
wherein said interface for connecting said external storage medium adapter to said computer is a block-based interface and said adapter comprises:
a mapping module (292) for mapping blocks to files and vice versa to access the files of said persistent storage device through said file based interface connecting said adapter with said persistent storage via said block based interface connecting said adapter to said computer, said adapter further comprising:
means for scanning the directory structure on said persistent storage device when the adapter is connected to said separate persistent storage device;
means for building a virtual file system, said virtual file system being generated by said mapping module (292) inside said adapter which recreates the directory structure inside the adapter for accessing data on said separate persistent storage device via a file-based interface;
a user interface which displays based on the virtual file system of said adapter to user the file operation which is to be performed, wherein said user interface of said adapter provides the user the possibility to confirm or to deny a file operation which was requested by said computer.

2. The storage medium adapter of claim 1, wherein said identifiers for identifying credentials are unique or at least stochastically unique across all storage medium adapters.

3. The external storage medium adapter of one of the preceding claims, further comprising:
an operations buffer (291) for storing all write operations until it is detected that the file system is in a consistent state again, and as soon as this happens, the files touched by the write operation are updated on the separate persistent storage device.

4. The external storage medium adapter of claim 3, wherein the consistency of the file system is detected based on one or more of the following triggers:
a certain time without write operations;
write operations to certain blocks such as those containing directory structures or file system tables or predefined files;
detaching the external medium adapter from said computer.

## Patentansprüche

1. Ein externer Speichermediumadapter (2) zum Bilden eine Verbindung zwischen einem Computer und einer separaten persistenten Speichervorrichtung, wobei der externe Speichermediumadapter aufweist:
ein erstes Interface zum Verbinden des Computers und zum Empfangen von Daten durch das Interface von dem Computer, welche in verschlüsselter Form auf der separaten persistenten Speichervorrichtung gespeichert werden sollen;
ein zweites Interface (4) zum Verbinden des externen Speichermediumadapters mit der separaten persistenten Speichervorrichtung;
eine Verschlüsselungsengine (25) zum Verschlüsseln von Daten, die von dem Computer empfangen wurden und die in verschlüsselter Form auf die persistente Speichervorrichtung geschrieben werden sollen, oder zum Entschlüsseln von Daten, die in entschlüsselter Form von der persistenten Speichervorrichtung unter Verwendung von einem oder mehreren Credentials abgerufen werden;
einen Credentialspeicher (24) zum Speichern der ein oder mehreren Credentials, die verwendet werden, um die Daten zu verschlüsseln oder zu entschlüsseln, wobei
der Adapter (2) ein Mapping zwischen einem Credential und seinem entsprechenden Identifier führt, wobei der Adapter so angepasst ist, dass zusätzlich zu den verschlüsselten Daten Metadaten auf die Speichervorrichtung geschrieben werden, wobei die Metadaten es ermöglichen, für die verschlüsselten Daten das Credential zu identifizieren, das von dem Adapter zu verwenden ist, um die verschlüsselten Daten zu entschlüsseln, wobei
das Interface (4) zum Verbinden des externen Speichermediumadapters mit der separaten persistenten Speichervorrichtumg ein filebasiertes Interface ist, und
wobei das Interface zum Verbinden des externen Speichermediumadapters mit dem Computer ein blockbasiertes Interface ist und der Adapter aufweist:
ein Mappingmodul (292), um Blocks auf Files zu mappen und umgekehrt, um auf die Files der persistenten Speichervorrichtung durch das filebasierte Interface zuzugreifen, das den Adapter mit dem persistenten Speicher verbindet, und zwar über das blockbasierte Interface, das den Adapter mit dem Computer verbindet, wobei der Adapter ferner aufweist:
einen Einrichtung zum Scannen der Verzeichnisstruktur auf der persistenten Speichervorrichtung, wenn der Adapter mit der separaten persistenten Speichervorrichtung verbunden wird;
eine Einrichtung zum Aufbau eines virtuellen Filesystems, wobei das virtuelle Filesystem erzeugt wird durch das Mappingmodul (292) innerhalb des Adapters, welcher die Verzeichnisstruktur innerhalb des Adapters wieder aufbaut, um auf Daten auf der separaten persistenten Speichervorrichtung über ein filebasiertes Interface zuzugreifen;
ein Userinterface, das basierend auf dem Filesystem des Adapters dem Benutzer die auszuführende Fileoperation anzeigt, wobei das Userinterface des Adapters dem Benutzer die Möglichkeit liefert, eine Fileoperation, die durch den Computer angefordert wurde, zu bestätigen oder abzulehnen.

2. Der Speichermediumadapter nach Anspruch 1, wobei die Identifiers zum Identifizieren von Credentials eindeutig oder zumindest stochastisch eindeutig über alle Speichermediumadapter sind.

3. Der externe Speichermediumadapter nach einem der vorhergehenden Ansprüche, ferner aufweisend:
einen Operationspuffer (291) zum Speichern aller Schreiboperationen bis festgestellt wird, dass das Filesystem erneut in einem konsistenten Zustand ist, und sobald dies passiert, die Files, die durch die Schreiboperationen tangiert wurden, auf der separaten persistenten Speichervorrichtung upgedatet werden.

4. Der externe Speichermediumadapter nach Anspruch 3, wobei die Konsistenz des Filesystems detektiert wird basierend auf einem oder mehreren der folgenden Auslöser:
eine bestimmte Zeit ohne Schreiboperationen;
Schreiboperationen auf bestimmte Blöcke wie diejenigen, die Verzeichnisstrukturen oder Filesystemtabellen oder vordefinierte Files enthalten;
Entfernen des externen Mediumadapters von dem Computer.

## Revendications

1. Adaptateur de support de stockage externe (2) permettant d'établir une connexion entre un ordinateur et un dispositif de stockage permanent séparé, ledit adaptateur de support de stockage externe comprenant :
une première interface permettant de se connecter audit ordinateur et de recevoir par l'intermédiaire de ladite interface dudit ordinateur, des données qui doivent être stockées sous forme chiffrée sur ledit dispositif de stockage permanent séparé ;
une seconde interface (4) permettant de connecter ledit adaptateur de support de stockage externe audit dispositif de stockage permanent séparé ;
un moteur de chiffrement (25) permettant de chiffrer les données qui sont reçues dudit ordinateur et qui doivent être écrites sous forme chiffrée sur ledit dispositif de stockage permanent ou de déchiffrer des données qui doivent être récupérées sous forme déchiffrée dudit dispositif de stockage permanent en utilisant un ou plusieurs justificatifs d'identité ;
un stockage de justificatif d'identité (24) permettant de stocker lesdits un ou plusieurs justificatifs d'identité utilisés pour chiffrer ou déchiffrer lesdites données, dans lequel
ledit adaptateur (2) maintient un mappage entre un justificatif d'identité et son identificateur correspondant, et ledit adaptateur est adapté de telle sorte que, outre lesdites données chiffrées, il existe des métadonnées écrites sur ledit dispositif de stockage, lesdites métadonnées permettant auxdites données chiffrées d'identifier le justificatif d' identité qui doit être utilisé par ledit adaptateur afin de déchiffrer lesdites données chiffrées, dans lequel
ladite seconde interface (4) permettant de connecter ledit adaptateur de support de stockage externe audit dispositif de stockage permanent séparé est une interface à base de fichiers, et
dans lequel ladite interface permettant de connecter ledit adaptateur de support de stockage externe audit ordinateur est une interface à base de blocs et ledit adaptateur comprend :
un module de mappage (292) permettant de mapper des blocs à des fichiers et vice versa pour accéder aux fichiers dudit dispositif de stockage permanent par l'intermédiaire de ladite interface à base de fichiers connectant ledit adaptateur avec ledit stockage permanent via ladite interface à base de blocs connectant ledit adaptateur audit ordinateur, ledit adaptateur comprenant en outre :
des moyens permettant de balayer la structure de répertoire sur ledit dispositif de stockage permanent lorsque l'adaptateur est connecté audit dispositif de stockage permanent séparé;
des moyens permettant de construire un système de fichiers virtuel, ledit système de fichiers virtuel étant généré par ledit module de mappage (292) à l'intérieur dudit adaptateur qui recrée la structure de répertoire à l'intérieur de l'adaptateur pour accéder à des données sur ledit dispositif de stockage permanent séparé via une interface à base de fichiers ;
une interface utilisateur qui affiche sur la base du système de fichiers virtuel dudit adaptateur à l'utilisateur, l'opération de fichier qui doit être effectuée, dans laquelle ladite interface utilisateur dudit adaptateur offre à l'utilisateur la possibilité de confirmer ou de refuser une opération de fichier qui a été demandée par ledit ordinateur.

2. Adaptateur de support de stockage selon la revendication 1, dans lequel lesdits identificateurs permettant d'identifier des justificatifs d'identité sont uniques ou au moins stochastiquement uniques à travers tous les adaptateurs de support de stockage.

3. Adaptateur de support de stockage externe selon l'une quelconque des revendications précédentes, comprenant en outre :
une mémoire tampon d'opérations (291) permettant de stocker toutes les opérations d'écriture jusqu'à ce qu'il soit détecté que le système de fichiers est à nouveau dans un état régulier, et des que cela intervient, les fichiers touchés par l'opération d'écriture sont mis à jour sur le dispositif de stockage permanent séparé.

4. Adaptateur de support de stockage externe selon la revendication 3, dans lequel la régularité du système de fichiers est détectée d'après un ou plusieurs des déclencheurs suivants :
un certain temps sans opération d'écriture ;
des opérations d'écriture sur certains blocs tels que ceux contenant des structures de répertoire ou des tables de système de fichiers ou des fichiers prédéfinis ;
un détachement de l'adaptateur de support externe dudit ordinateur.
